# EUROPEAN PATENT APPLICATION

(11) **EP 1 919 063 A1**
(43) Date of publication of application: **07.05.2008**
(21) Application number: 06022879.8
(22) Date of filing: 02.11.2006
(51) Int. Cl.: H02K 41/02, H02K 21/44, H02K 1/08, H02K 1/14, H02K 19/08

(54) **Flux-reversal linear motor**

(71) Applicant: SY.TRA.MA. S.R.L., 20060 Vignate MI (IT)
(72) Inventor: Pagani, Gianluca, 20161 Milano (IT)
(74) Representative: Alagem Modiano, Lara S.

(57) **Abstract**

A flat linear motor (1) comprises a primary element (2) with a coil (4) around each of its teeth (3). Each tooth end (31) facing the reluctance-type secondary element (5) houses an embedded pair of permanent magnets (9,10) of opposite polarity parallel to the tooth axis.
Each tooth (3) has a longitudinal slit (35) along its axis as flux barrier to reduce leakage flux. Laminated teeth (3) and yoke (40) of the primary element (2) are segmented and dove-tail joint (41-44).

## Description

The present invention relates to a flux-reversal linear motor, particularly adapted for applications in the field of automation and robotics and in all positioning or movement systems in which positioning precision and rigidity of motion transmission are required.

It is known that in traditional linear or rectilinear motors with surface magnets, the excitation flux is generated by permanent magnets mounted on a stationary supporting platen, known as secondary element or more briefly as secondary, and interacts with windings arranged on a different movable support, known as primary element or, more briefly, primary. The primary and secondary can also be termed respectively stator and translator, although this last term, for a linear motor, is not always representative of the moving element and of the stationary element of the motor. Depending on the applications, the secondary can in fact be fixed and the primary can be movable on a plane which is parallel to the secondary, or vice versa.

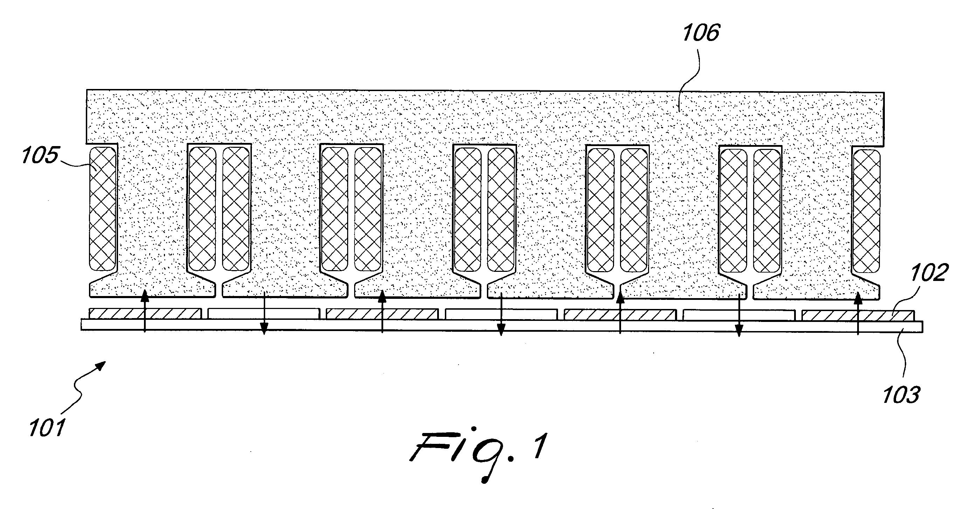

In the traditional linear motor, shown in Figure 1, the secondary 101 comprises a series of permanent magnets 102, which are glued with alternating polarities on the upper face of a stationary surface 103 made of steel. The magnets 102 generate a stationary magnetic flux, which interacts with a variable magnetic flux generated by the currents which flow in the windings 105 of the primary 106 during the relative movement of the two supports, with the result of generating a mechanical action which is converted into a thrust or force.

Rotary flux-reversal motors, known as brushless, are also known which have permanent magnets in the same region where the windings are located, i.e., on the primary or stator. In greater detail, two magnets are glued onto each tooth of the primary, face directly the air gap and have an opposite magnetic orientation and a symmetrical polarity with respect to the adjacent tooth, i.e., N-S S-N N-S S-N etc. The rotor is instead constituted by a toothed cylindrical structure made of soft ferromagnetic material, whose pitch is adapted for the number of magnetic poles that the machine must have.

In flux-reversal rotary motors, the permanent magnets, due to induction, polarize the toothed structure of the rotor, which in turn closes the magnetic flux across the other teeth of the stator. The relative motion of the two parts causes, from the point of view of the flux lines, the continuous variation of the magnetic geometry and accordingly of the path of the flux lines. This variation induces a variable counter-electromotive force in the windings, which represents the voltage generated naturally by the motor in opposition to the voltage generated by the external power source that supplies power to the windings. The counter-electromotive force is linked to the concept of voltage constant and, accordingly, to the concept of torque constant, which is typical of rotary motors.

This parameter is extremely important for the operation of the machine, since it indicates the torque that can be obtained from it for an equal current and speed with an excitation that derives purely from the action of the permanent magnets.

A drawback which characterizes known linear motors is the large number of permanent magnets that must be used, which depends substantially on the length of the secondary and/or on the stroke of the motor.

Another drawback of known motors is linked to the complex operations for fixing the permanent magnets, which besides extending the assembly times of the motor also entails considerable costs in terms of production. Moreover, this type of assembly of the permanent magnets entails the additional problem of the mechanical actions that occur between the magnets and the iron parts, with the possible result of the separation of the permanent magnet and consequent downtime of the machine.

The aim of the present invention is to solve the problems identified above by providing a linear motor which has a small number of components and ensures good performance in terms of thrust force.

Within this aim, an object of the invention is to provide a linear motor which protects the permanent magnets from the separation from the corresponding support and from the action of any harmful external agents.

Another object of the invention is to provide a linear motor in which the concatenations with the stator windings are increased at the same number of turns, in order to improve the efficiency of the motor.

Moreover, the present invention has the additional object of reducing the operations required to manufacture and assemble a linear motor.

Another object of the invention is to provide a linear motor which is highly reliable, relatively easy to provide and at competitive costs.

This aim and these and other objects, which will become better apparent hereinafter, are achieved by a flux-reversal linear motor according to the invention, which comprises a primary element provided with at least one primary tooth around which a respective winding is arranged which is adapted to conduct a variable electric current, characterized in that it comprises a toothed secondary element which faces said at least one primary tooth, the toothed secondary element comprising a series of secondary teeth made of ferromagnetic material which protrude toward said at least one primary tooth so as to define an air gap of the motor, each primary tooth comprising a pair of magnets at the end of the primary tooth that is directed toward the air gap of the motor, the magnets being mounted so as to direct mutually opposite polarities toward the air gap.

Further characteristics and advantages of the invention will become better apparent from the description of a preferred but not exclusive embodiment of the linear motor according to the invention, illustrated by way of non-limiting example in the accompanying drawings, wherein:
Figure 1 is a schematic sectional view of a conventional permanent-magnet linear motor;
Figure 2 is a schematic front view of a linear motor according to the invention;
Figure 3 is a front view of a linear motor according to a preferred embodiment of the invention;
Figure 4 is a front view of a lamination of a primary tooth of Figure 3;
Figure 5 is a front view of a modular lamination of the yoke of the primary of Figure 3;
Figure 6 is a view of the lines of flux of the linear motor of Figure 3.

With reference to the figures, the linear motor according to the invention, generally designated by the reference numeral 1, comprises a primary element or stator 2, which is rectilinear and is provided with at least one tooth 3 or preferably a plurality teeth 3 arranged side-by-side.

A respective winding 4 is arranged around each tooth 3 (referenced here as primary tooth) and is composed of a coil, made for example of copper, and is connected to a conventional electronic driver, not shown in the figures.

Preferably, the primary element 2 is composed of a plurality of ferromagnetic laminations, which have the same shape and are stacked so as to form a lamination pack having the toothed structure of the primary element 2 shown in the figures.

The linear motor 1 also comprises a toothed secondary element 5 made of ferromagnetic material, which is flat and faces the teeth 3 of the primary element.

The primary element and the secondary element are mounted conventionally on a structure (not shown in the figures) which supports the linear movement of the primary element (or of the secondary element, depending on the applications), while the other element remains stationary.

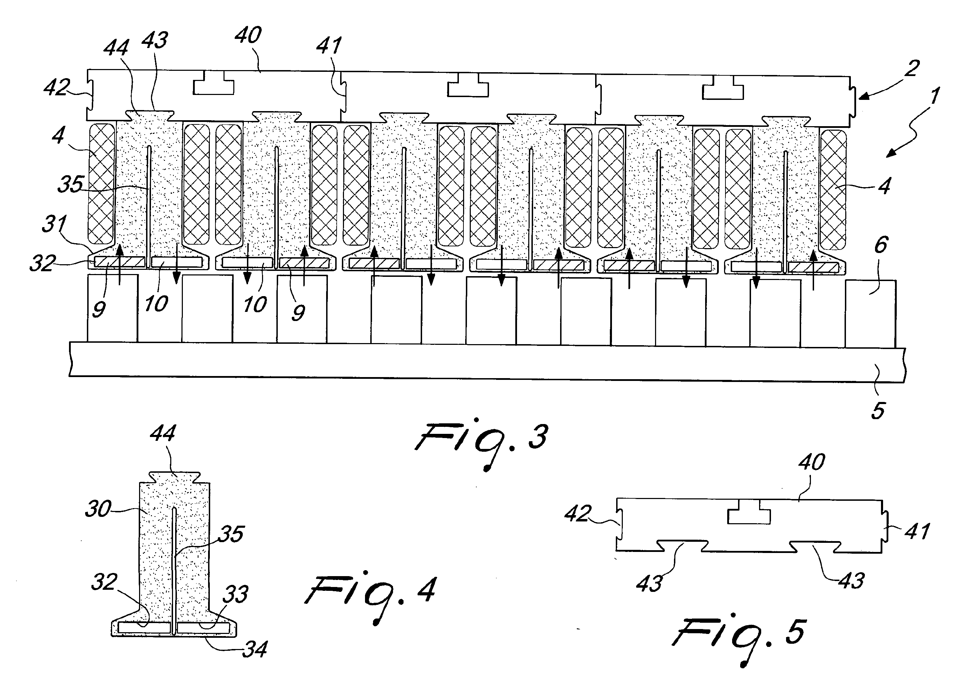

The toothed secondary element 5 has a series of teeth, here referenced as secondary teeth 6, also made of ferromagnetic material, preferably soft iron. The secondary teeth 6 can be provided directly on the ferromagnetic platen that constitutes the secondary element or can be produced separately and fixed to the plate, as in Figure 3.

The secondary teeth 6 are preferably aligned along the longitudinal direction 7 of the motor and lie along the plane of the secondary element 5, preferably in a transverse direction 8 of the motor, so as to face the primary teeth 3, which also protrude in the transverse direction 8.

If necessary, the directions of transverse extension of the secondary teeth 6 and of the primary teeth 3 can be mutually different or can be inclined, in order to avoid parasitic jamming or cogging phenomena which occur during the operation of the motor. Optionally, the primary teeth 3 and/or the secondary teeth 6 can be arranged transversely, in order to arrange the spatial harmonics of said cogging in phase opposition and theoretically eliminate them. As an alternative, the primary teeth 3 and/or the secondary teeth 6 can be arranged non-symmetrically and/or non-periodically, in order to reduce the points to minimum reluctance and accordingly move closer the minimum- and maximum-energy points.

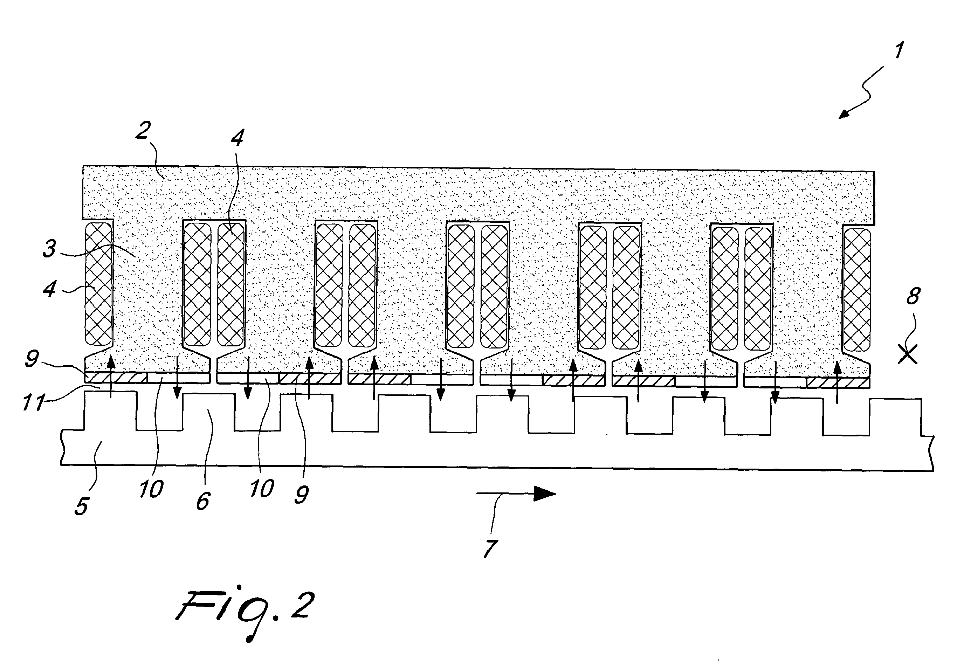

Each tooth 3 of the primary comprises at least one pair of permanent magnets 9 and 10, at the end of the tooth 3 which is directed toward the secondary teeth 6, i.e., toward the air gap 11 of the motor. The magnets 9 and 10 are mounted so as to direct toward the air gap 11 polarities which are mutually opposite and, in the longitudinal direction 7 of the motor, are inverted with respect to the polarities of the pair of magnets of the adjacent primary tooth 3. In Figures 2 and 3, the polarities of the magnets 9 and 10 are shown by means of vertical arrows.

The magnets can be mounted at the end of the tooth 3, for example by gluing them to the lower surface of the tooth 3, as in Figure 2. However, in a preferred embodiment of the invention shown in Figure 3, the pair of magnets 9 and 10 is accommodated in at least one internal cavity of the end 31 of the primary tooth 3 that faces the air gap 11. In particular, in the embodiment of Figure 3, the end 31 comprises two cavities 32, 33 which are adapted to accommodate a respective magnet 9, 10 of the tooth 3.

The cavities 32 and 33 provided on the end 31 of the tooth 3 are preferably through cavities, in order to allow easy installation by sliding of the permanent magnets in the structure of the primary element. In a structure formed by laminations, such as the one that can be used to manufacture the primary element 2, it is particularly convenient and quick to provide through openings which are adapted to define the cavities 32 and 33 by resorting to conventional sheet metal working techniques.

Preferably, the internal dimensions of the cavities 32 and 33 are such as to allow shape coupling to the respective magnets 9 and 10 in order to prevent any movements of the magnets within the cavities 32 and 33.

The base 34 of the cavities 32 and 33 constitutes a support for the permanent magnets 9 and 10, which can simply be supported by the base 34 without having to resort to any kind of gluing or fixing.

Advantageously, the base 34 of the cavities has a low thickness (for example 0.4 mm), such as to enter magnetic saturation due to the flux generated by the permanent magnets. In this manner, the flux lines produced by a permanent magnet do not close immediately in the iron of the tooth that accommodates the magnet but pass through the air gap 11, entering the toothed structure 6 of the secondary 5 and exiting in order to concatenate with a winding 4 of another tooth.

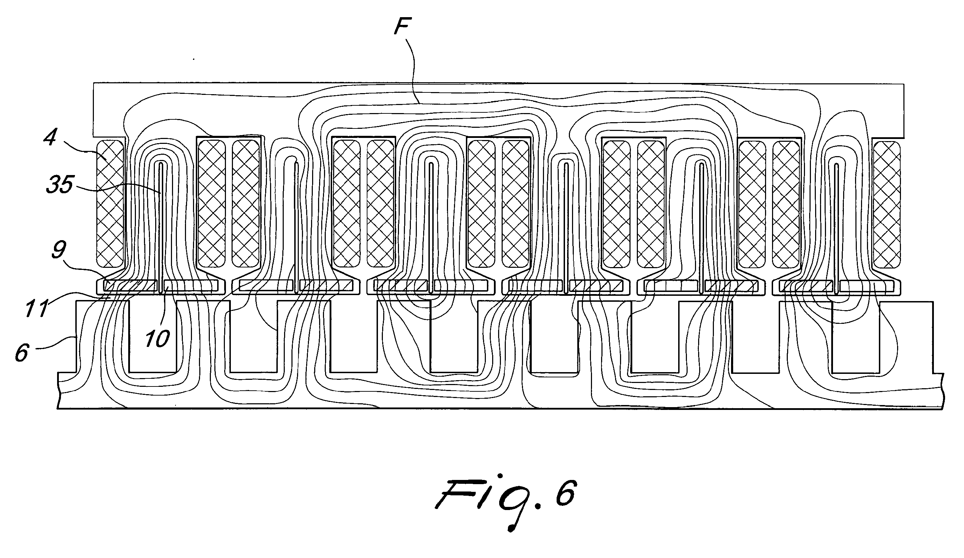

Each primary tooth 3 may further have a flux barrier 35 arranged between the two magnets 9 and 10, which is adapted to increase the length of the path of the flux lines F produced by the permanent magnets of one tooth and to force said lines to concatenate with the windings of an adjacent tooth, as shown in Figure 6. In this manner, by increasing the number of concatenations with each winding 4, the motor 1 has higher efficiency, for an equal number of turns of the winding, since the magnetic flux is able to pass more effectively from one tooth to another and the voltage constant due to the excitation component, i.e., to the permanent magnets, is increased.

The flux barrier 35 can be a slot which is coaxial to the vertical axis of the primary tooth 3 and is much higher than the thickness of the permanent magnet, as shown in Figure 3. The height of the slot 35 can be substantially equal to, or slightly lower than, the height of the tooth 3, or such as to run along most of the axis of the winding 4.

As for the cavities 32 and 33, the provision of the flux barrier 35 is particularly convenient and quick if the primary element 2 consists of a pack of stacked laminations, since such laminations can be worked by means of conventional sheet metal working techniques in order to obtain the cutouts required to define the flux barrier 35 when they are stacked.

According to a particular aspect of the invention, the laminations that constitute the primary element are provided according to a modular structure, in which a plurality of stacked yokes 40 are connected to each other and to the upper ends of the packs of laminations 30 that constitute the primary teeth 3, preferably by means of dovetail or interlocking couplings.

In greater detail, with reference to Figure 5, each modular yoke 40 consists of a substantially rectangular lamination made of ferromagnetic material which has, on its two lateral ends, a lateral tenon 41 and a lateral mortise 42 respectively. In this manner, it is possible to increase the longitudinal dimension of the primary element 2 simply by interlocking laterally with respect to the existing yoke structure an additional pack of yokes 40 and respective primary teeth 3.

The primary teeth also can each consist of a pack of ferromagnetic laminations 30 (Figure 4), which are appropriately machined in order to obtain cutouts by means of which the cavities for the magnets and the flux barrier 35 are defined. Of course, each lamination 30 of the tooth does not have to be provided monolithically but can also be formed by two mirror-symmetrical half -laminations, each provided with a cavity for a respective magnet and shaped laterally so as to define, once arranged side-by-side, the slot for the flux barrier 35.

The yoke 40 also comprises at least one lower mortise 43, which is adapted to interlock with a corresponding tenon 44 provided in each lamination 30 of the tooth 3. The provision of mortises 43 or in any case of interlocking or rail-like means for supporting the primary teeth allows not only quick installation of the lamination packs 30 on the yokes but also a possible extension of the transverse dimensions of the primary element.

In practice it has been found that the linear motor according to the invention fully achieves the intended aim, since it allows first of all to reduce drastically the number of permanent magnets, which becomes completely independent of the length of the stroke of the motor, i.e., of the longitudinal dimension of the secondary element. The secondary can therefore be simply made of soft iron and without the expensive permanent magnets, which remain confined within the primary active part and are present in a limited number which does not depend on the length of the stroke.

Moreover, the installation of the magnets in suitable supporting chambers provided within the primary teeth ensures a reliable means for supporting the magnets and at the same time eliminates completely the labor-intensive conventional step of gluing the magnets to the secondary. It is therefore possible to also use magnets of lower quality than those that conventionally have to be glued to the secondary, without however affecting the performance of the motor.

Moreover, the mechanical action caused by the interaction of the fluxes is reinforced by the anisotropy component caused by the variation of the magnetic reluctance on the secondary.

Therefore, considering that the contribution to the generation of force is determined by the variation of magnetic reluctance that each coil sees during the relative motion between the primary and secondary and that the inductance varies according to a specific rule dictated by the shape of said magnetic circuit, in the present invention the anisotropy-related force contribution is added to the excitation contribution, improving the performance of the motor.

Clearly, the appropriate choice of the pitches of the teeth and of the arrangement of the windings is a design choice which is at the discretion and within the grasp of a person skilled in the art and depends on the necessities of the particular application demanded to the motor. This choice is aimed at obtaining a sinusoidal shape of the counter-electromotive force and an amplitude which is as maximized as possible for an equal number of turns of the winding. For example, in the case of a structure with six slots on the primary and eight poles on the secondary, such as the one shown in Figure 3, in order to have a form of counter-electromotive force which is substantially sinusoidal it has been found that the width of the secondary tooth must be equal to the width of the magnet on the primary.

The device thus conceived is susceptible of numerous modifications and variations, all of which are within the scope of the inventive concept. For example, it is evident that each tooth of the primary element used in the invention can comprise more than one pair of permanent magnets, arranged with alternating polarities, although this variation is economically unfavorable.

All the details of the invention may of course be replaced with other technically equivalent elements, and the materials used, as well as the dimensions, may be any according to requirements and to the state of the art.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A linear motor comprising a primary element provided with at least one primary tooth around which a respective winding is arranged which is adapted to conduct a variable electric current, **characterized in that** it comprises a toothed secondary element which faces said at least one primary tooth, said toothed secondary element comprising a plurality of secondary teeth made of ferromagnetic material which protrude toward said at least one primary tooth so as to define an air gap of the motor, each primary tooth comprising at least one pair of magnets at the end of the primary tooth that is directed toward the air gap of the motor, the magnets being mounted so as to direct mutually opposite polarities toward the air gap.

2. The linear motor according to claim 1, wherein the primary element comprises a plurality of said primary teeth, which are arranged side-by-side along a longitudinal direction of the motor, the pair of magnets of each primary tooth being mounted so as to have, in the longitudinal direction of the motor, reversed polarities with respect to the polarities of the pair of magnets of the adjacent primary tooth.

3. The linear motor according to claim 1 or 2, wherein the magnets are mounted on the surface of the end of the primary tooth that faces the air gap.

4. The linear motor according to claim 1 or 2, wherein the pair of magnets is accommodated in at least one cavity arranged inside the end of the primary tooth that faces the air gap.

5. The linear motor according to claim 4, wherein said end of the primary tooth comprises two cavities which are adapted to accommodate a respective magnet of the pair of magnets.

6. The linear motor according to claim 4 or 5, wherein said cavities are through cavities, so as to receive the magnets by sliding.

7. The linear motor according to one or more of claims 4, 5 and 6, wherein the internal dimensions of the cavities are such as to allow a shape coupling to the respective magnets.

8. The linear motor according to one or more of claims 4 to 7, wherein each of said cavities comprises a base which is adapted to support said magnets, said base having such a thickness as to enter magnetic saturation due to the magnetic flux produced by said magnets.

9. The linear motor according to one or more of the preceding claims, wherein each primary tooth comprises a magnetic flux barrier which is arranged between the magnets of the pair of magnets and is adapted to facilitate concatenations of lines of magnetic flux between the windings of different primary teeth.

10. The linear motor according to claim 9, wherein the flux barrier is a slot which is coaxial to a vertical axis of the primary tooth and has such a height as to extend within the winding along most of the axis of the winding.

11. The linear motor according to one or more of the preceding claims, wherein each primary tooth is composed of a pack of laminations which have the same shape, each lamination having cutouts which are adapted to define, within the pack, said cavities and/or said flux barrier.

## Amended claims

### Amended claims in accordance with Rule 137(2) EPC.

**1.** A linear motor (1) comprising a primary element (2) provided with at least one primary tooth (3) around which a respective winding (4) is arranged which is adapted to conduct a variable electric current, a toothed secondary element (5) which faces said at least one primary tooth (3), said toothed secondary element (5) comprising a plurality of secondary teeth (6) made of ferromagnetic material which protrude toward said at least one primary tooth (3) so as to define an air gap (11) of the motor, each primary tooth (3) comprising at least one pair of magnets (9, 10) at the end (31) of the primary tooth (3) that is directed toward the air gap (11) of the motor (1), the magnets (9, 10) being mounted so as to direct mutually opposite polarities toward the air gap (11), the pair of magnets (9, 10) is accommodated in at least one cavity arranged inside the end (31) of the primary tooth (3) that faces the air gap (11), **characterized in that** each of said cavities (32, 33) comprises a base (34) which is adapted to support said magnets (9, 10), said base (34) having such a thickness as to enter magnetic saturation due to the magnetic flux produced by said magnets (9, 10).

**2.** The linear motor (1) according to claim 1, wherein the primary element (2) comprises a plurality of said primary teeth (3), which are arranged side-by-side along a longitudinal direction (7) of the motor (1), the pair of magnets (9, 10) of each primary tooth (3) being mounted so as to have, in the longitudinal direction (7) of the motor (1), reversed polarities with respect to the polarities of the pair of magnets (9, 10) of the adjacent primary tooth (3).

**3.** The linear motor (1) according to claim 1 or 2, wherein the magnets (9, 10) are mounted on the surface of the end (31) of the primary tooth (3) that faces the air gap (11).

**4.** The linear motor (1) according to claim 1, wherein said end (31) of the primary tooth (3) comprises two cavities (32, 33) which are adapted to accommodate a respective magnet of the pair of magnets (9, 10).

**5.** The linear motor (1) according to claim 1 or 4, wherein said cavities (32, 33) are through cavities, so as to receive the magnets (9, 10) by sliding.

**6.** The linear motor (1) according to one or more of claims 1, 4 and 5, wherein the internal dimensions of the cavities (32, 33) are such as to allow a shape coupling to the respective magnets (9, 10).

**7.** A linear motor (1) comprising a primary element (2) provided with at least one primary tooth (3) around which a respective winding (4) is arranged which is adapted to conduct a variable electric current, a toothed secondary element (5) which faces said at least one primary tooth (3), said toothed secondary element (5) comprising a plurality of secondary teeth (6) made of ferromagnetic material which protrude toward said at least one primary tooth (3) so as to define an air gap (11) of the motor, each primary tooth (3) comprising at least one pair of magnets (9, 10) at the end (31) of the primary tooth (3) that is directed toward the air gap (11) of the motor (1), the magnets (9, 10) being mounted so as to direct mutually opposite polarities toward the air gap (11), the pair of magnets (9, 10) is accommodated in at least one cavity arranged inside the end (31) of the primary tooth (3) that faces the air gap (11), **characterized in that** each primary tooth (3) comprises a magnetic flux barrier (35) which is arranged between the magnets (9, 10) of the pair of magnets (9, 10) and is adapted to facilitate concatenations of lines of magnetic flux between the windings (4) of different primary teeth (3).

**8.** The linear motor (1) according to claim 7, wherein the flux barrier (35) is a slot which is coaxial to a vertical axis of the primary tooth (3) and has such a height as to extend (31) within the winding (4) along most of the axis of the winding (4).

**9.** The linear motor (1) according to one or more of the preceding claims, wherein each primary tooth (3) is composed of a pack of laminations (30) which have the same shape, each lamination (30) having cutouts which are adapted to define, within the pack, said cavities (32, 33) and/or said flux barrier (35).
